# EUROPEAN PATENT APPLICATION

(11) **EP 2 284 781 A1**
(43) Date of publication of application: **16.02.2011**
(21) Application number: 09167785.6
(22) Date of filing: 13.08.2009
(51) Int. Cl.: G06Q 10/00

(54) **Integration of the management of interventions on equipment with a daily laboratory analysis work in a Laboratory Information Management System (LIMS)**

(71) Applicant: SIEMENS AKTIENGESELLSCHAFT, 80333 München (DE)
(72) Inventor: Depreter, Frédéric, 7070 Le Roeulx (BE)
(74) Representative: Kley, Hansjörg

(57) **Abstract**

The present invention discloses a method and a system for managing in a LIMS at least one intervention on at least one equipment managed by said LIMS, and in particular with at least a daily analysis work, the system comprising:
- at least one equipment intervention management module integrated to said LIMS;
- means for defining in said equipment intervention management module, intervention management rules for said equipment managed by said LIMS;
- means for defining in said equipment intervention management module, at least one intervention process for said equipment;
- means for executing said intervention (I).

## Description

The present invention relates generally to a Laboratory Information Management System (LIMS) and specifically to a method and a system for integrating a management of interventions on laboratory or process line equipment with a daily analysis work in a LIMS.

As it is well known, a method for managing and controlling manufacturing and/or analysis processes planned by an Enterprise Resource Planning (ERP) and produced by a technical process line, provides in the environment of a Manufacturing Executing System (MES) an automation system for implementing the planned analysis processes and controlling the corresponding workflow steps at the level of the technical process line.

In particular, the Enterprise Resource Planning (ERP) is a system including hardware devices and corresponding software applications for planning the business resources of an enterprise, i.e. material provisions, human resource managements, purchasing, orders, profits, finance, inventory controls, customer managements, etc., while the term "technical process line" refers to a system supporting the control of single machines involved in the analysis processes, for example by measuring the number of pieces handled per hour by each machine or the functioning parameters thereof, the quality of the analysis results and so on.

MES is an intermediate layer providing computing machines and software tools between the ERP upper layer and the process line lower layer, including a software tool for analysis management, which receives requests of analysis from the ERP, and a software tool for productive process, which supports the phases of selecting and managing the resources to be involved in the productive processes, i.e. employees, machines and materials, in order to realize a planned analysis process within required time constraints.

MES is based on the ISA (International Standard Association) standard S95 which defines how software tools may implement the productive process at plant floor level and how to communicate with it. Beside the productive process itself, it is crucial for many industries to control the productive process in terms of analysis, measurements and traceability of the products, like for example for pharmaceutical industry, food industry, high-tech industry, or for industries where the productive process itself is a process of analyzing a sample, i.e. medical diagnostic analysis, material science analysis, drug scanning and so on.

These results of an analysis process are typically managed by software processes which are closely related to the MES software. Siemens Corp. is distributing this kind of software under its trade name "SIMATIC IT UNILAB®". This type of software is typically called a LIMS (Laboratory Information Management System) software. It manages the results of the analysis and/or measurements from laboratories or production lines, in particular with a determined aspect on the traceability of the sample or production results. Usually, all these results are related to a distinct sample, or lot which is reflected in an electronic sample record corresponding to the physical sample. During the workflow along the technical process line, the electronic sample records also a status information corresponding to the actual status of the physical sample. Typical status are for example "Arrived in Laboratory", "Ready for analysis", "Analyzed", "To be inspected by Lab Manager", "Repeat analysis" and so on.

Thus, the LIMS software is usually a multi-purpose user-friendly configurable software for manufacturing processes in different types of laboratories, which implies consequently a large immanent need of customization of this software. For example, it typically models and manages complete workflows of data in labs or production lines, such as results of analysis, data acquisition, samples measurements or also reports. In a LIMS software, the handling of data generated, for example, by instrumentations, procedures, workflow, or arising from database, or also the synchronization of manufacturing processes with business processes and complex supply chains, are usually automated and configurable. In particular, LIMS software allows to execute analysis by means of a user-friendly input form containing for example multiple fields. Some of these fields might be, for example, filled in by a user for calculations purpose, or might simply report analysis or results coming from an equipment or a whole process line. By equipment we refer in particular to any instrument or machine comprised in a laboratory or in a process line. Due to its flexibility, scalability and business-related benefits, LIMS softwares provide solutions of a wide variety of industrial processes.

Thereby, typical tasks managed by a LIMS software are generally presented to the user in an interactive input form that allows for example:
- to execute analysis based on multiple fields filled in particular either automatically, or by the user;
- to perform some calculations based on the filled field;

Although the LIMS software is a standard software which satisfies numerous demands of laboratory operator, it actually does not allow a management of an intervention that has to be realized on a laboratory or process line equipment. Thus, we can differentiate two types of softwares, on one hand LIMS softwares doing typical tasks, such as normal measurements methods, including for example at least an analysis execution with a multiple fields input form and calculations based on said multiple fields, and on the other hand softwares dedicated to intervention management on equipments, like for example the calibration of a laboratory instrument.

Effectively, the state of the art proposes on one hand, software for interventions on equipment - hereafter called intervention software - and on the other hand, LIMS software for managing results of analysis or measurements of equipment, said softwares being unable to communicate the one with the other one, due to high complexity of their code basis. Consequently, two different softwares, respectively said LIMS software and said intervention software, are always needed in order to manage, respectively, results of analysis or measurements provided by some equipment, and interventions realized on said equipment itself. In other words, there is an impassable separation between equipment management (i.e. for example what an instrument is doing and how we control it), and equipment intervention management (i.e. management of interventions related to the instrument itself, said intervention being for example a calibration process that updates automatically some parameters of the equipment, said calibration being done at a specific frequency).

In other words, no LIMS software provides a flexible and compatible management of interventions that have to be done on a laboratory or process line equipment, based for example on a specific scheduling of the calibration in function of critical parameters or time, or also a maintenance or a cleaning of the equipment, that has to be executed for at least one equipment in order to prevent a malfunction of said equipment, or to guaranty their correct working. It means that in order to manage on the one hand complete workflows of data in labs or production lines and, on the other hand, labs or production lines equipments interventions, an operator has to run one particular software for intervention processes for said equipments, said software being generally specific to a unique instrument, and another software, such as a LIMS, for managing the said complete workflow of data. Actually, interventions on equipments involved in a production line or a laboratory have to be managed by an operator, who will check for example for each equipment parameters related to an intervention (calibration, cleaning, maintenance, etc.) and decide if it has to be done or not. Such procedure is on one hand time consuming and, on the other hand, might be source of human errors.

It is therefore an objective of the present invention to provide a method and a system for managing interventions on equipment in one LIMS software, so that the LIMS software is able to manage directly the interventions that have to be done for an equipment, such as calibration, maintenance or cleaning.

This objective is achieved according to the present invention with respect to the method by a method for managing, in a LIMS, in particular in a LIMS software, at least one intervention on at least one equipment managed by the LIMS, in particular managed by the LIMS software, and in particular with at least a daily analysis work, the method comprising the steps of:
- defining in an equipment intervention management module integrated to said LIMS, intervention management rules for said equipment managed and/or controlled by the LIMS or the LIMS software;
- defining in said equipment intervention management module integrated to said LIMS, at least one intervention process for said equipment;
- executing said intervention, in particular in accordance with the defined rules and intervention process.

This objective is achieved according to the present invention with respect to the system by a system for managing, in a LIMS, in particular in a LIMS software, at least one intervention on at least one equipment managed by the LIMS, in particular managed by the LIMS software, and in particular with a daily analysis work, the system comprising:
- at least one equipment intervention management module integrated to said LIMS and interacting with it;
- means for defining in said equipment intervention management module, intervention management rules of said equipment managed and/or controlled by the LIMS or LIMS software;
- means for defining in said equipment intervention management module, at least one intervention process for said equipment, notably by means of interactions between the LIMS, or LIMS software, and said intervention management module;
- means for executing said intervention, in particular in accordance with the defined rules and intervention process.

In particular, the equipment intervention management module allows to integrate to a LIMS software an input form related to interventions on equipment, and said module is in particular able to communicate and exchange information with said instrument. Therefore, the method and the system provide a reliable and easy way to manage interventions on equipment within a LIMS, in particular a LIMS software, by integrating the management of interventions to directly to the LIMS or LIMS software. According to one embodiment of the invention, the intervention management rules comprise at least an intervention scheduling, for example in function of the time or in function of equipment parameters, or also in function of other equipment processes, that are involved, for example, in a same production line. In particular, means for intervention scheduling, for example in function of time or equipment parameters, allow to plan the interventions realized on an equipment. Advantageously, the intervention scheduling comprises at least intervention frequencies, which might be for example defined in function of the time, or in function of the number of time the equipment has been used, resulting either in time dependence or in use dependence of the intervention. The intervention management rules might be in particular pre-recorded in the intervention management module, or created by an operator, so that said interventions are completely customizable by the user. Consequently, a definition of the intervention management rule is sufficiently flexible and configurable so that the rules are adaptable to any equipment.

According to a preferred embodiment, the invention comprises means for defining a warning period before a scheduled intervention and means for defining a grace period during which the equipment might be used even if the scheduled intervention did not take place as planned by the intervention scheduling. Consequently, the intervention due date is at least bordered by a first period, said warning period that takes place before said intervention due date, and a second period, said grace period, that takes place after the intervention due date and warns the equipment user that an intervention did not take place and should be done as soon as possible. Advantageously, while using a LIMS software, a user working with an equipment gets, in particular, at least one intervention warning when said equipment is in the warning period or in the grace period. Moreover, the method according to the invention comprises in particular a step of preventing any use of said equipment during said intervention. In order to do this, preventing means are for example advantageously comprised in the equipment intervention management module. For example, a user executing with the LIMS an analysis with an input form cannot execute said analysis if the intervention is in process, or if the grace period is finished or also if the intervention has failed. Advantageously, if an intervention fails, or simply in the case of intervention malfunction, the method comprises, in particular, a step of executing a troubleshooting procedure that alerts an operator and/or the equipment user. The troubleshooting procedure is for example supported by troubleshooting means advantageously comprised in the equipment intervention management module.

In particular, said intervention comprises at least an equipment calibration. Effectively, means for executing the equipment calibration are advantageously integrated to the equipment intervention management module. The method according to the invention allows thus to build a calibration schedule for an equipment in function of a temporal scale or in function of the number of time the equipment is used, in particular by means of interactive tools comprised in the equipment intervention management module, that help a user in constructing a feasible and reliable calibration schedule. Calibration operations that have to be scheduled are in particular represented by tasks that keep busy one or more resource of the equipment for a known amount of time. Moreover, a preferred embodiment of the invention provides means for managing at least one result of said calibration intervention and updating at least one parameter of said equipment in function of the result of the calibration intervention. Thereby, the method according to the invention is in particular characterized by a step of managing at least one result of said calibration and updating at least one equipment parameter in function of said result of the calibration. Typically, a calibration results in one or more corrections factors, for example some constants, that have to be used for all measurements executed with that equipment after the calibration, in order to guaranty that the equipment is working correctly and providing correct results or measurement values. By updating equipment parameters with these factors, the equipment passes from a state of pre-calibration comprised either in the warning period or the grace period, to a ready working state.

### Brief description of the drawings

- Figure 1: schematically represents an example of typical management of an intervention on an equipment;
- Figure 2: schematically represents an example of a possible workflow for an intervention;

### Detailed description

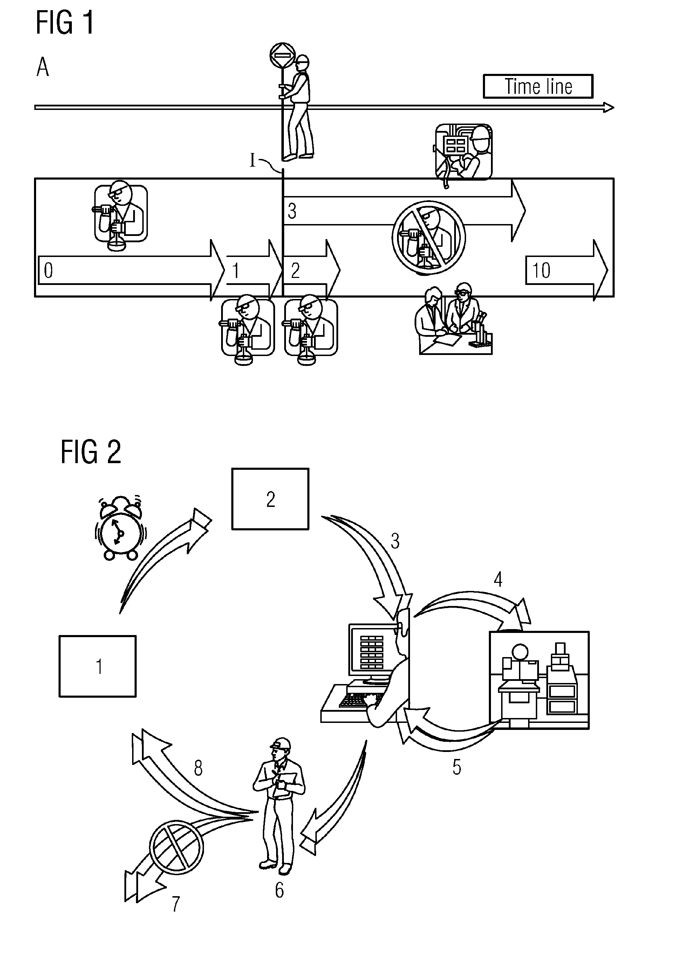

Figure 1 schematically represents an example of typical intervention management on an equipment. Said intervention takes place during a normal usage phase of said equipment. This intervention might be for example an equipment calibration, cleaning or maintenance. The intervention might appear periodically, in function of the time or in function of the number of time the equipment is used, but also in function of a critical parameter of the equipment, said parameters being for example defined by a user. Consequently, different periods are defined in a life loop of an equipment as shown in Fig. 1:
- a period of normal usage 0 of the equipment: the equipment is working normally and no interventions are recorded for this period,
- a warning period 1: during this period, a normal usage of the equipment is possible, but the user is informed about a future intervention I that will take place in a close future,
- if the intervention did not take place, then a grace period 2 is defined: during this period, a user can still use the equipment, but he is warned about the intervention that did not take place at the scheduled time. Consequently, some parameters might for example not be exact, and the user is advantageously informed about the working state of the equipment,
- an intervention period 3: the intervention period might begin at the scheduled date for the intervention, but, in any case, the intervention period 3 takes place at the end of the grace period. During the intervention period, it becomes impossible to use the equipment, and consequently, means for preventing a user to use the equipment inform said user of the non working state of the equipment,
- once an intervention is finished, a new period of normal usage 10 begins, and the life loop is closed.

The normal usage period 0 and the warning period 1 correspond to a normal intervention period: the user is for example warned that an intervention is nearly due, but normal operation can go on. At the opposite, during the grace period 2, the user is informed that the equipment is in its grace period and that normally an intervention is required to guaranty for example the correct functioning of said equipment, or correct measurement values.

Figure 2 schematically represents an example of a possible workflow for an intervention according to a series of successive steps:
- monitoring an intervention 1, in order to define for example an intervention process or frequency;
- create automatically intervention sample/method 2 at the scheduled date of the intervention;
- assignment to a worklist 3, in order for example to execute the intervention process;
- intervention 4: the intervention itself takes place; It is for example a calibration process of an instrument or a machine;
- entry of the intervention results 5, for example the calibration process results in correction factors that have to be taken into account for the correct working of the instrument;
- validation of the intervention 6: for example, before to change the state of the equipment from an out of calibration state to a calibrated state, an operator or a user checks the parameters of the equipment;
- corrective actions 7: if the intervention failed, the equipment stays in a non working state, and new interventions have to be done in order to bring the equipment in a working state. If the intervention succeeded 8, the workflow continues, with for example monitoring a new intervention.

Finally, the method and the system according to the invention have the following advantages:
- a user working for example on an analysis with the LIMS software gets intervention warnings when the equipment used is in the warning or grace period;
- a user working for example on an analysis with the LIMS cannot execute said analysis if the grace period is finished, or if the intervention is in process or if the last intervention failed;
- a user may perform an intervention with the LIMS software in order to bring an equipment in a working state, whereas two different softwares were needed in the state of the art in order to do the intervention and normal LIMS software tasks;
- no apparent difference between a "normal sample" and an "intervention sample" for the final user. He can handle these 2 types of sample in the same way. More precisely, a sample is a standard object in a LIMS typically related to a material (solid, liquid, gas) that should be analyzed in the laboratory. We can differentiate normal sample/method, that is related to product analysis, and intervention sample/method, that is related for example to an action on an instrument like its calibration. Only the effect of the execution of said sample differs if it is a "normal sample" related for example to product analysis, or an "intervention sample", related for example to the calibration of an instrument. Indeed, the effect of the execution of a normal sample is typically delivering the analysis results of a product, providing for example some statistics on a product that is processed by an instrument. The effect of the execution of an intervention sample/methods is different. Indeed, the effect of the execution of an intervention sample is typically, for example, in the case of a calibration, delivering new equipment constants and a new status for the equipment. Of course, the users are handling the two types of samples, normal samples and intervention samples, in the same way, the only difference being found in the result or effect of the execution of said samples. In particular, there are no special form in the LIMS dedicated to the execution of the intervention sample/method, in other words, the forms are not specific to the type of sample;
- a unique database is used for running the LIMS software and the interventions, and collecting data, so that all information related to an equipment is inside one data model which makes the auditing of equipment activities more easy and reliable;
- no need of collecting data from two different softwares with two different data models related to interventions and LIMS typical tasks in order to build up the history of an equipment, and thus resulting in an improved traceability;
- a unique software is used to manage interventions and typical LIMS tasks.

## Claims

1. Method for managing, in a Laboratory Information Management System, at least one intervention on at least one equipment managed by said Laboratory Information Management System, the method comprising the steps of:
- defining in an equipment intervention management module integrated to the Laboratory Information Management System, intervention management rules for said equipment;
- defining in said equipment intervention management module integrated to said Laboratory Information Management System, at least one intervention process for said equipment;
- executing said intervention (I).

2. Method according to claim 1, wherein said intervention management rules comprise at least an intervention scheduling.

3. Method according to claim 2, wherein the intervention scheduling comprises at least intervention frequencies.

4. Method according to one of the preceding claims, further comprising the step of defining a warning period (1) before said intervention (I).

5. Method according to claims 2 to 4, further comprising the step of defining a grace period (2) during which the equipment might be used even if the scheduled intervention (I) did not take place as planned by the intervention scheduling.

6. Method according to any of the preceding claims, further comprising the step of preventing any use of said equipment during said intervention.

7. Method according to any of the preceding claims, wherein said intervention comprises at least an equipment calibration.

8. Method according to claim 7, further comprising the steps of managing at least one result of said calibration and updating at least one equipment parameter in function of the result of the calibration.

9. System for managing, in a Laboratory Information Management System, at least one intervention on at least one equipment managed by said Laboratory Information Management System, the system comprising:
- at least one equipment intervention management module integrated to the Laboratory Information Management System;
- means for defining in said equipment intervention management module, intervention management rules for said equipment managed by the Laboratory Information Management System;
- means for defining in said equipment intervention management module, at least one intervention process for said equipment;
- means for executing said intervention (I).

10. System according to claim 9, further comprising means for intervention scheduling.

11. System according to one of the claims 9 or 10, further comprising means for defining a warning period (1) before said intervention (I).

12. System according to one of the claims 9 to 11, further comprising means for defining a grace period (2) during which the equipment might be used even if the scheduled intervention (I) did not take place as planned by the intervention scheduling.

13. System according to one of the claims 9 to 12, further comprising means for preventing any use of said equipment during said intervention.

14. System according to one of the claims 9 to 13, comprising at least means for executing an equipment calibration intervention.

15. System according to claim 14, further comprising means for managing at least one result of said calibration intervention and updating at least one parameter of said equipment in function of the result of the calibration intervention.
